# EUROPÄISCHE PATENTSCHRIFT

(11) **EP 1 228 158 B1**
(45) Veröffentlichungstag und Bekanntmachung des Hinweises auf die Patenterteilung: **30.07.2008**
(21) Anmeldenummer: 00958455.8
(22) Anmeldetag: 16.08.2000
(51) Int. Cl.: C09J 9/00, C09J 11/00

(54) **Verklebung durch Klebstoffe enthaltend nanoskalige Teilchen**
Bonding by adhesives containing nanoparticles
Collage par adhésif contenant des particules nanometriques

(30) Priorität: 24.08.1999 DE 19940128
(43) Veröffentlichungstag der Anmeldung: 07.08.2002
(73) Patentinhaber: Henkel AG & Co. KGaA, 40589 Düsseldorf (DE)
(72) Erfinder: DAUSMANN, Dieter, D-40599 Düsseldorf (DE); FRANKEN, Uwe, D-41470 Neuss (DE); KIRSTEN, Christian, N., D-40789 Monheim (DE); MATHES, Nikolaus, D-42113 Wuppertal (DE)
(86) Internationale Anmeldenummer: PCT/EP2000/007975
(87) Internationale Veröffentlichungsnummer: WO 2001/014490

(56) Entgegenhaltungen:
- WO-A-99/24520
- US-A- 5 462 617

## Beschreibung

Die Erfindung betrifft ein Verfahren zur Verklebung von offenporigen und/oder nicht porösen Substraten mit Schmelzklebstoffen, insbesondere bei der Schuhherstellung und die Verwendung eines nanoskalige Teilchen enthaltenden klebstoffs zum Klebstoffauftrag durch Sprühen.

Anforderungen und Spezifikationen für einen Klebstoff bei der Schuhherstellung sind in EN 522 und EN 1392 beschrieben. Von besonderer Bedeutung ist ein hoher Setzkontakt ("spotting tack"), der das exakte Positionieren, z.B. der Sohle an den Schuhboden gewährleistet. Für die Qualität/Festigkeit der Klebung ist ferner eine gute Penetration / Benetzung der zu klebenden Substrate, insbesondere bei porösen und vor allem faserigen, erforderlich. Diese Anforderungen stehen insbesondere bei der Verwendung von Schmelzklebstoffen in gegenseitigem Widerspruch. Der derzeitige Stand der Technik basiert entweder auf amorphen Systemen oder kristallinen Formulierungen. Während amorphe Schmelzklebstoff einen ausreichenden Setzkontakt zeigen, ist die Penetration bzw. Benetzung derartiger Systeme unzureichend. Bei der Verwendung kristalliner Systeme ist in der Regel eine gute Penetration vorhanden, wohingegen der Setzkontakt zur Positionierung der Schuhsohle ungenügend ist. Zwar lassen sich amorphe oder kristalline Schmelzklebstoffe hinsichtlich der beschriebenen Probleme optimieren, jedoch gehen diese Verbesserungen stets zu Lasten der anderen oben beschriebenen Anforderung. Optimaler Setzkontakt bei optimaler Penetration/Benetzung ist alleine durch Formulierung nach dem Stand der Technik nicht zu realisieren.

Die dargegestellten Schwierigkeiten sind in den derzeitigen Prozeßabläufen nur durch zusätzliche und dabei aufwendige Arbeitsschritte zu bewältigen. In DE 19504007 ist beispielsweise das Vor- bzw. Nachheizen von Substraten zur Verbesserung der Penetration eines amorphen Schmelzklebstoffs beschrieben. Alternativ und häufig einzige Möglichkeit zum Erhalt einer hochwertigen Klebung ist die zusätzliche Applikation einer Primer- und/oder Klebstoff-Schicht zur Durchführung einer Kontaktklebung ("two-way-Verfahren"). In vielen Fällen bedeutet dies, daß die angestrebte lösemittelfreie Verklebung nicht realisierbar ist.

In der WO 99/24520 wird ein mit Mikrowellen aktivierbarer Klebstoff beschrieben, der neben seinen Polymeren zusätzlich auch noch eine Mischung aus 2 Komponenten enthält, die für Mikrowellen empfänglich sind und die hinsichtlich Größe, Form und Leitfähigkeit ausgewählt sind, um die Absorption der Mikrowellen in der polymeren Zusammensetzung zu erhöhen. Um Holz, Kunststoffe und Halbleiter mit - und untereinander zu verkleben, soll der Klebstoff auf bekannte Art und Weise, z.B. durch Sprühen auf einen oder auf beide Substrate aufgetragen und dann mit den Mikrowellen behandelt werden, wobei der Klebstoff eine Bindung bildet. Nachteilig bei diesem Klebstoff ist, daß er sich durch Sprühen nicht genau und konstant auftragen läßt und daher für bestimmte Anwendungen unbrauchbar ist, z.B. bei der Schuherstellung zum Verkleben von Sohlen.

Ausgehend von diesem Stand der Technik bestand die erfindungsgemäße Aufgabe darin, ein Verfahren zum Verkleben von porösen und nicht porösen Werkstoffen zu entwickeln, wobei die Festigkeitsanforderungen sicher erfüllt werden und wobei es keine Probleme beim Auftrag des Klebstoffes durch Sprühen gibt.

Gegenstand der Erfindung ist die Verwendung einer Klebstoff-Zusammensetzung, insbesondere eines Schmelzklebstoffes, die nanoskalige Teilchen mit ferromagnetischen, ferrimagnetischen, superparamagnetischen oder piezoelektrischen Eigenschaften enthält, zum Klebstoffauftrag durch Sprühen.

Ein weiterer Gegenstand der Erfindung ist ein Verfahren zur Herstellung von Klebeverbindungen mit Hilfe von elektrischen, magnetischen oder elektromagnetischen Wechselfeldern, wobei die Klebstoffschicht nanoskalige Teilchen enthält, die unter Einfluß dieser Wechselfelder direkt die Klebstoffschicht erwärmen, gekennzeichnet durch Auftrag des nanoskalige Teilchen mit ferromagnetischen, ferrimagnetischen, superparamagnetischen oder piezoelektrischen Eigenschaften enthaltenden Klebstoffs durch Sprühen.

Die Erwärmung der Klebstoffschicht dient der Steigerung der Festigkeit der Verklebungen durch bessere Benetzung bzw. Penetration durch den erwärmten Klebstoff, insbesondere Schmelzklebstoff. Dabei dienen die nanoskaligen Teilchen als Füllstoffe mit "Signalempfänger"-Eigenschaft, so daß Energie in Form von elektromagnetischen Wechselfeldern gezielt in den Klebeverbund eingetragen wird. Durch den Energieeintrag in den Klebstoff kommt es zu einer lokalen starken Temperaturerhöhung, wodurch die Viskosität verringert wird.

Gegenüber den herkömmlichen Erwärmungsmethoden zeichnet sich das erfindungsgemäße Verfahren dadurch aus, daß die Wärmeerzeugung lokal definiert in der Klebefuge geschieht und daß eine thermische Belastung der zu verklebenden Substratmaterialien selbst vermieden bzw. minimert wird. Das Verfahren ist sehr zeitsparend und effektiv, da die Wärme nicht durch Diffusionsvorgänge durch die Substrate hindurch in die Klebefuge eingebracht werden muß. Dieses Verfahren reduziert auch in erheblichem Maße Wärmeverluste durch Wärmeableitung bzw. Wärmestrahlung über das Substrat, dadurch wird das erfindungsgemäße Verfahren besonders ökonomisch. Vor allem aber verhindern die nanoskaligen Teilchen nicht die Sprühbarkeit der Klebstoffschmelze, allenfalls wird sie behindert.

Zur Energieeintragung eignen sich elektrische Wechselfelder oder magnetische Wechselfelder. Bei der Anwendung elektrischer Wechselfelder sind als Füllmaterialien alle piezoelektrischen Verbindungen geeignet, z.B. Quarz, Turmalin, Bariumtitanat, Lithiumsulfat, Kalium(Natrium)tartrat, Ethylendiamintartrat, Ferroelektrika mit Perowskitstruktur und vor allem Blei-Zirkonium-Titanat. Bei der Verwendung von magnetischen Wechselfeldern eignen sich grundsätzlich alle ferrimagnetischen, ferromagnetischen oder superparamagnetischen Stoffe, insbesondere die Metalle Aluminium, Kobalt, Eisen, Nickel oder deren Legierungen sowie Metalloxide vom Typ n-Maghmit (γ-Fe₂O₃), n-Magnetit (Fe₂O₄), Ferrite von der allgemeinen Formel MeFe₂O₄, wobei Me für zweiwertige Metalle aus der Gruppe Kupfer, Zink, Kobalt, Nickel, Magnesium, Calcium oder Cadmium steht.

Bei der Verwendung magnetischer Wechselfelder eignen sich insbesondere nanoskalige superparamagnetische Teilchen, sogenannte "single-domainparticle". Im Vergleich zu den vom Stand der Technik bekannten paramagnetischen Partikeln zeichen sich die nanoskaligen Füllstoffe dadurch aus, daß solche Materialien keine Hysterese aufweisen. Dies hat zur Folge, daß die Energiedissipation nicht durch magnetische Hystereseverluste hervorgerufen wird, sondern es wird angenommen, daß die Wärmeerzeugung vielmehr auf eine während der Einwirkung eines elektromagnetischen Wechselfeldes induzierte Schwingung oder Rotation der Teilchen in der umgebenden Matrix und somit letztlich auf mechanische Reibungsverluste zurückzuführen ist. Dies führt zu einer besonders effektiven Erwärmungsrate der Teilchen und der sie umgebenden Matrix.

"Nanoskalige Teilchen" im Sinne der vorliegenden Erfindung sind dabei Teilchen mit einer durchschnittlichen Teilchengröße (bzw. einem durchschnittlichen Teilchendurchmesser) von nicht mehr als 500 nm, vorzugsweise unter 300 nm. Ein besonders bevorzugter Bereich sind Teilchengrößen unter 100 nm, vorzugsweise nicht mehr als 50 nm und insbesondere nicht mehr als 30 nm. Vorzugsweise weisen die erfindungsgemäß einzusetzenden nanoskaligen Teilchen eine mittlere Teilchengröße im Bereich von 1 bis 40 nm, besonders bevorzugt zwischen 3 und 30 nm auf. Für die Ausnutzung der Effekt durch Superparamagnetismus sollen die Teilchengrößen nicht mehr als 30 nm betragen.

Die Teilchengröße wird dabei bevorzugt nach der UPA-Methode (Ultrafine Particle Analyzer) bestimmt, z.B. nach dem Laser-Streulicht-Verfahren ("laser light back scattering"). Um eine Agglomeration oder ein Zusammenwachsen der nanoskaligen Teilchen zu verhindern oder zu vermeiden, sind diese üblicherweise oberflächenmodifiziert bzw. oberflächenbeschichtet. Ein derartiges Verfahren zur Herstellung agglomeratfreier nanoskaliger Teilchen ist am Beispiel von Eisenoxidteilchen in der DE-A-196 14 136 in den Spalten 8 bis 10 angegeben. Einige Möglichkeiten zur oberflächlichen Beschichtung derartiger nanoskaliger Teilchen zur Vermeidung einer Agglomeration sind in der DE-A-197 26 282 angegeben.

Die nanoskaligen Stoffe werden in einer Menge von 1 bis 30 Gew.-%, vorzugsweise von 3 bis 10 Gew.-%, dem Klebstoff zugesetzt, bezogen auf die Gesamtzusammensetzung.

Als Energie zur Erwärmung der nanoskalige Teilchen enthaltenden Klebstoffe eignet sich prinzipiell jedes höherfrequente elektromagnetische Wechselfeld: so lassen sich beispielsweise elektromagnetische Strahlungen der sog. ISM-Bereiche (industrial, scientific and medical application) einsetzen, d.h Frequenzen zwischen 100 MHz und etwa 200 GHz. Nähere Angaben hierzu finden sich unter anderem bei Kirk-Othmer, "Encyclopedia of Chemical Technology", 3. Auflage, Band 15, Kapitel "Microwave technology".

Es war bereits weiter oben darauf hingewiesen worden, daß bei der Verwendung von nanoskaligen Teilchen im Sinne dieser Erfindung die elektromagnetische Strahlung in besonders effektiver Weise ausgenutzt werden kann. Dies zeigt sich besonders deutlich daran, daß bereits im sehr niederfrequenten Bereich von etwa 50 kHz oder 100 kHz bis hinauf zu 100 MHz nahezu jede Frequenz verwendet werden kann, um eine zur Spaltung der Klebeverbindungsmatrix notwendige Wärmemenge in der Klebstoffmatrix zu erzeugen. Bevorzugt kann ein Frequenzbereich zwischen 500 kHz und 50 MHz benutzt werden. Die Auswahl der Frequenz kann sich dabei nach den zur Verfügung stehenden Geräten richten, wobei selbstverständlich dafür Sorge getragen werden muß, daß Störfelder nicht abgestrahlt werden.

Die Klebstoffe mit den nanoskaligen Teilchen können mit oder ohne Primer zum Verkleben von offenporigen und/oder nicht porösen Substraten verwendet werden, da sie sich gut durch Sprühen auftragen lassen.

## Patentansprüche

1. Verwendung einer Klebstoff-Zusammensetzung, insbesondere eines Schmelzklebstoffes, die nanoskalige Teilchen mit ferromagnetischen, ferrimagnetischen, superparamagnetischen oder piezoelektrischen Eigenschaften enthält, zum Klebstoffauftrag durch Sprühen.

2. Verfahren zur Herstellung von Klebeverbindungen mit Hilfe von elektrischen, magnetischen oder elektromagnetischen Wechselfeldern, wobei die Klebstoffschicht nanoskalige Teilchen enthält, die unter Einfluß dieser Wechselfelder direkt die Klebstoffschicht erwärmen, **gekennzeichnet durch** Auftrag des nanoskalige Teilchen mit ferromagnetischen, ferrimagnetischen, superparamagnetischen oder piezoelektrischen Eigenschaften enthaltenden Klebstoffs **durch** Sprühen.

3. Verfahren nach Anspruch 2, **dadurch gekennzeichnet, daß** die nanoskaligen Teilchen eine durchschnittliche Teilchengröße von nicht mehr als 500 nm, vorzugsweise unter 300 nm und insbesondere unter 100 nm aufweisen.

4. Verfahren nach Anspruch 2 oder 3, **dadurch gekennzeichnet, daß** der Klebstoff die nanoskaligen Teilchen in einer Menge von 1 bis 30 Gew.-%, vorzugsweise von 3 bis 10 Gew.-%, bezogen auf die Gesamtzusammensetzung enthält.

5. Verfahren nach einem oder mehreren der Ansprüche 2 bis 4, **dadurch gekennzeichnet, dass** als Klebstoff ein Schmelzklebstoff, vorzugsweise ein thermoplastisch erweichbarer Schmelzklebstoff oder ein Reaktionsklebstoff, eingesetzt wird.

6. Verfahren nach einem oder mehreren der Ansprüche 2 bis 5, **dadurch gekennzeichnet, daß** man den Klebstoff elektromagnetischen Wechselfeldern mit Frequenzen zwischen 100 MHz und 200 GHz aussetzt.

7. Verfahren nach einem oder mehreren der Ansprüche 2 bis 6, **dadurch gekennzeichnet, daß** man den Klebstoff mit den nanoskaligen Teilchen mit oder ohne Primer zum Verkleben von offenporigen und/oder nicht porösen Substraten verwendet.

## Claims

1. Use of an adhesive composition, in particular a hot-melt adhesive, which contains nanoscale particles with ferromagnetic, ferrimagnetic, superparamagnetic or piezoelectric properties, for adhesive application by spraying.

2. A method for producing adhesive bonds with the assistance of electrical, magnetic or electromagnetic alternating fields, the adhesive layer containing nanoscale particles which, under the influence of these alternating fields, directly heat the adhesive layer, **characterized by** application of the adhesive containing nanoscale particles with ferromagnetic, ferrimagnetic, superparamagnetic or piezoelectric properties by spraying.

3. A method according to claim 2, **characterized in that** the nanoscale particles have an average particle size of no more than 500 nm, preferably below 300 nm and in particular below 100 nm.

4. A method according to claim 2 or claim 3, **characterized in that** the adhesive contains the nanoscale particles in a quantity of 1 to 30 wt.%, preferably of 3 to 10 wt.%, relative to the overall composition.

5. A method according to one or more of claims 2 to 4, **characterized in that** a hot-melt adhesive, preferably a thermoplastically softenable hot-melt adhesive or a reactive adhesive, is used as the adhesive.

6. A method according to one or more of claims 2 to 5, **characterized in that** the adhesive is exposed to electromagnetic alternating fields with frequencies of between 100 MHz and 200 GHz.

7. A method according to one or more of claims 2 to 6, **characterized in that** the adhesive with the nanoscale particles is used with or without primer for the adhesive bonding of open-pored and/or non-porous substrates.

## Revendications

1. Utilisation d'une composition d'adhésif, en particulier d'un adhésif thermofusible, qui contient des particules à l'échelle du nanomètre possédant des propriétés ferromagnétiques, ferrimagnétiques, superparamagnétiques ou piézo-électriques, pour une application d'adhésif par pulvérisation.

2. Procédé pour la préparation de composés adhésifs à l'aide de champs alternatifs électriques, magnétiques ou électromagnétiques, la couche d'adhésif contenant des particules à l'échelle du nanomètre qui, sous l'influence de ces champs alternatifs, chauffe directement la couche d'adhésifs, **caractérisé par** une application de l'adhésif contenant des particules à l'échelle du nanomètre possédant des propriétés ferromagnétiques, ferrimagnétiques, superparamagnétiques ou piézo-électriques, par pulvérisation.

3. Procédé selon la revendication 2, **caractérisé en ce que** les particules à l'échelle du nanomètre présentent une granulométrie moyenne qui n'est pas supérieure à 500 nm, de préférence qui est inférieure à 300 nm et en particulier qui est inférieure à 100 nm.

4. Procédé selon la revendication 2 ou 3, **caractérisé en ce que** l'adhésif contient les particules à l'échelle du nanomètre en une quantité de 1 à 30 % en poids, de préférence de 3 à 10 % en poids, rapportés à la composition totale.

5. Procédé selon une ou plusieurs des revendications 2 à 4, **caractérisé en ce qu'**on met en oeuvre à titre d'adhésif, un adhésif thermofusible, de préférence un adhésif thermofusible apte à un ramollissement thermoplastique ou un adhésif de réaction.

6. Procédé selon une ou plusieurs des revendications 2 à 5, **caractérisé en ce qu'**on expose l'adhésif à des champs alternatifs électromagnétiques possédant des fréquences entre 100 MHz et 200 GHz.

7. Procédé selon une ou plusieurs des revendications 2 à 6, **caractérisé en ce qu'**on utilise l'adhésif possédant les particules à l'échelle du nanomètre avec ou sans couche de fond pour le collage de substrats apport ouverts et/ou non poreux.
